# EUROPEAN PATENT APPLICATION

(11) **EP 1 239 197 A1**
(43) Date of publication of application: **11.09.2002**
(21) Application number: 02005411.0
(22) Date of filing: 08.03.2002
(51) Int. Cl.: F16J 15/32

(54) **Method of producing a dynamic sealing ring**

(30) Priority: 09.03.2001 IT TO010217
(71) Applicant: Stefa S.r.l., 10151 Torino (IT)
(72) Inventor: Fabro, Roberto, 10145 Torino (IT)
(74) Representative: Jorio, Paolo

(57) **Abstract**

A method of producing a sealing ring (1) for a rotary shaft (3), whereby an elastomeric material is fed into a mold (23) designed to form a main sealing lip (10) cooperating, in use, in sliding manner with the rotary shaft (3) to retain an operating fluid (4), and an annular portion (25) integral with the main lip (10) and formed by the last of the material fed into the mold (23); the annular portion (25) being shaped to form an additional radial sealing lip (15) located in series with the main lip (10) to intercept and retain part of the operating fluid (4) directed towards the main lip (10).

## Description

The present invention relates to a method of producing a sealing ring for rotary shafts.

For sealing rotary shafts, sealing rings are used comprising a core; a radial sealing lip exposed to the fluid for sealing; and an elastic member for pressing the sealing lip against the rotary shaft.

Though widely used, sealing rings of the above type are unsatisfactory, especially when working with fluids containing aggressive residue, such as burnt oil condensate and deposits, threads and undissolved lumps of detergent in the case of washing machines, machining residue such as sand or chips, etc., which attack and alter the original sealing characteristics of the sealing lip, so that the sealing efficiency of the ring is soon impaired. At times, the problem is further compounded by wear on the shaft itself, caused by hard residue trapped in the sealing region close to the sealing lip.

To protect the sealing lip against harmful, abrasive components in the fluid, the sealing ring described above is provided with an additional seal, which is made separately from the sealing ring and comprises a rigid supporting and fastening structure normally fitted to the inside of the sealing ring, and an additional radial sealing lip carried by the supporting structure and extending facing and axially apart from the sealing ring lip, with which it defines a chamber. The additional lip is appropriately shaped and forced against the shaft to permit controlled fluid flow into the chamber and to lubricate the sealing ring lip while at the same time keeping out any abrasive components by which the sealing ring lip may be damaged.

Though widely used by being "modular", in the sense that the additional seal may or may not be used, depending on the characteristics of the fluid for sealing, known solutions of the above type have the drawback of being particularly expensive, mainly due to featuring two "complete seals" arranged in series. That is to say, both lips have respective supporting structures, which must be designed to fit together easily, so as to avoid increasing assembly time which is already considerable, but which must also be kept in fixed relative positions as the shaft rotates and when subjected to the action of the fluid.

Moreover, in solutions of the above type, the chamber formed between the two seals, i.e. between the additional and sealing ring lips, is particularly large and therefore houses a relatively large amount of fluid, which lubricates the lips under normal operating conditions, but which, during prolonged stoppages, settles so that a large quantity of dry residue adheres to the lips, and gives rise to severe corrosion when the shaft is started up again.

It is an object of the present invention to provide a method of producing a sealing ring for rotary shafts, designed to provide a straightforward, low-cost solution to the aforementioned drawbacks.

According to the present invention, there is provided a method of producing a sealing ring for a rotary shaft; the method comprising the steps of feeding an elastomeric material into a mold, so as to form a main sealing lip cooperating, in use, in sliding manner with the rotary shaft to retain an operating fluid, and an annular portion integral with the main lip and formed by the last of the material fed into the mold; characterized by also comprising the further steps of shaping said annular portion so as to form an additional radial lip located in series with said main lip and contacting, in use, said rotary shaft to intercept and retain part of said fluid directed towards the main lip.

The present invention also relates to a sealing ring for a rotary shaft.

According to the present invention, there is provided a sealing ring for a rotary shaft, comprising a main sealing lip cooperating, in use, in sliding manner with the rotary shaft to retain an operating fluid; and an additional radial lip located in series with said main lip and directly contacting, in use, said rotary shaft to intercept and retain part of said fluid directed towards said main lip; characterized in that said main lip and said additional lip form part of a single body formed in one piece.

A non-limiting embodiment of the invention will be described by way of example with reference to the accompanying drawings, in which:
Figure 1 shows a radial half-section of a preferred embodiment of the sealing ring according to the present invention fitted to a rotary shaft;
Figures 2 and 3 show the same view as in Figure 1, of an intermediate step in the formation of the sealing ring, and of the sealing ring in a final undeformed condition respectively.

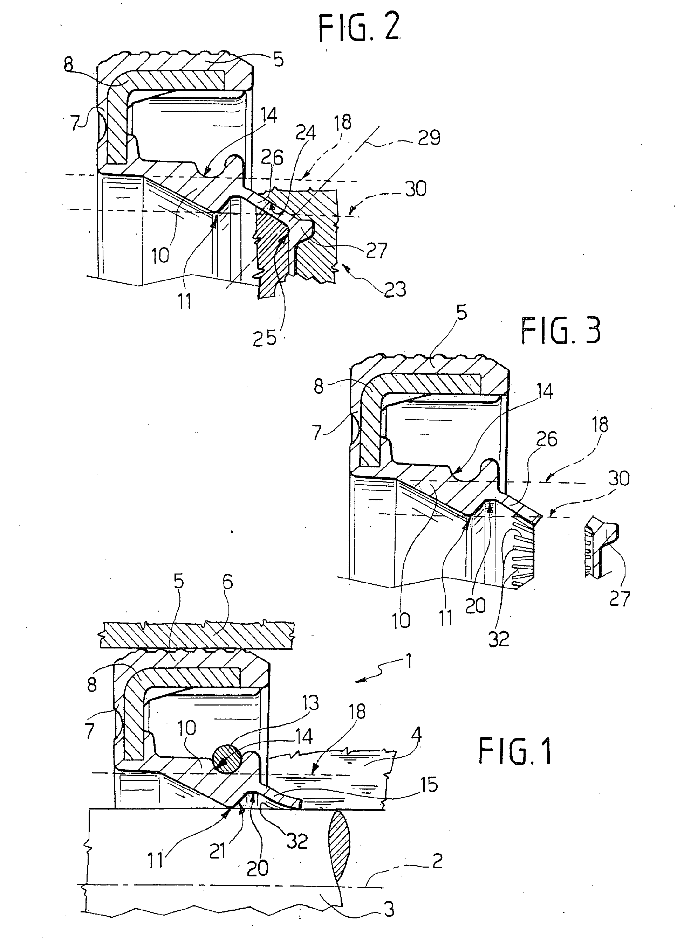

Number 1 in Figure 1 indicates as a whole a sealing ring having an axis 2 and fitted to a rotary shaft 3 to retain a fluid 4.

Ring 1 comprises an annular lateral wall 5 fitted to a support 6, and an annular end wall 7, both made of elastomeric material and reinforced by a core 8 of preferably metallic or plastic material; and a known radial main sealing lip 10 projecting from end wall 7 and inside lateral wall 5. In radial half-section, main lip 10 is substantially V-shaped, is made of the same elastomeric material as the walls, and has an inner sealing edge 11 pressed radially on to shaft 3 by a known annular spring 13 (Figure 1) housed in an annular seat defined by a bottom surface 14.

With reference to Figure 1, ring 1 also comprises an annular additional lip 15 integral with lip 10 and projecting from a portion of lip 10 adjacent to edge 11, and inside both fluid 4 for sealing and a theoretical cylindrical surface, the generating line of which is indicated 18, and which is coaxial with axis 2 and tangent to surface 14. Lips 10 and 15 are located in series facing each other, and are defined internally by a continuous inverted V-shaped surface 20, which, together with shaft 3, also defines a chamber 21 housing part of the fluid for sealing, and comprises two conical portions flaring towards each other and having respective generating lines which, at least when ring 1 is undeformed, are substantially straight.

Ring 1 is formed by placing core 8 inside a mold 23 (shown partly), and feeding the elastomeric material into mold 23 so as to completely fill the cavities of mold 23 and form walls 5 and 7 and a lip identical with main lip 10, or as similar as possible, depending on the problems posed by removal. As shown particularly in Figure 2, mold 23, unlike conventional known molds, is designed to form an annular end cavity 24, which extends axially and constitutes an axial extension of, and communicates with, the cavity forming the main lip. Annular cavity 24 is the last to be filled by the elastomeric material fed into mold 23, and, as shown in Figure 2, produces an annular portion 25 formed by the last of the material fed into mold 23. Together with the main lip so formed, portion 25 forms part of a one-piece body, and, in the example shown, comprises a truncated-cone-shaped portion 26 integral with and flaring towards main lip 10, and an annular end portion 27. Once the elastomeric material in mold 23 is cured, the semifinished part so formed is removed from the mold and undergoes a single cutting operation whereby at least annular portion 25 formed by the last of the material is cut along a line 29 (Figure 2) to remove portion 27. In the event the main lip, when the semifinished part is removed from the mold, is other than the desired final shape, e.g. for removal reasons, the above cutting operation also cuts a portion of the molded main lip facing, for example, annular portion 25. In which case, cutting may conveniently be performed using parallel knives when cutting annular portion 25, so as to obtain a main lip with a suitable sealing profile, i.e. of precise desired geometric characteristics, and an additional lip 15, which, when undeformed, has a free end portion extending inside a theoretical cylindrical surface 30 (Figure 3) coaxial with axis 2 and through sealing edge 11. Such an arrangement provides for obtaining, after assembly, a flexed additional lip which alone, i.e. without the aid of elastic elements such as springs, acts radially on shaft 3 to form a barrier preventing any impurities or harmful components in the fluid from reaching the main lip and collecting inside chamber 21.

The barrier formed by additional lip 15 is further enhanced by a number of projections 32 formed, either directly in mold 23 or after removal of the semifinished part from mold 23, on the inner surface of truncated-cone-shaped portion 26, and therefore on lip 15, and which, in use, cooperate in sliding manner with shaft 3. When undeformed, projections 32 are preferably substantially straight and converge with one another towards the free end of additional lip 15.

As will be clear from the foregoing description, though featuring an additional sealing lip 15 facing and for protecting main lip 10, sealing ring 1 as described is much cheaper to produce as compared with known solutions. This is mainly due to additional lip 15 being integral with main lip 10, and therefore not requiring a supporting and fastening structure of its own, and not involving any assembly cost. Moreover, the two lips remain in fixed relative operating positions regardless of the rotation speed of the shaft, and regardless of the state of the lips in terms of elasticity and shape.

Moreover, additional lip 15 is formed using what, in known solutions, is a waste portion of elastomeric material, i.e. a portion which, like all so-called "slug" portions, is normally cut off to form the finished ring.

Forming an additional lip connected directly to the main lip also provides for obtaining, between the two lips, a fixed-volume chamber - in the example shown, chamber 21 - which is much smaller as compared with known chambers, so that only a small amount of fluid remains, in use, between the two lips, and, following prolonged stoppages, only a small amount of dry residue remains to interact with lips 10 and 15. Moreover, being small, the chamber is flushed rapidly by the incoming fluid when the shaft is started up again, so that, as compared with known solutions, lips 10 and 15 have a longer working life, and the shaft itself shows no noticeable sign of corrosion even after long operating periods.

Clearly, changes may be made to ring 1 as described herein without, however, departing from the scope of the present invention.

In particular, both main lip 10 and additional lip 15 may differ in shape and size from those described and illustrated by way of example; additional lip 15 may comprise a seat for an elastic radial pressure element; and the inner surface of additional lip 15 may be designed to define, together with shaft 3, a number of fluid chambers in series, as well as hydrodynamic projections of various designs and directions.

## Claims

1. A method of producing a sealing ring (1) for a rotary shaft (3); the method comprising the steps of feeding an elastomeric material into a mold (23), so as to form a main sealing lip (10) cooperating, in use, in sliding manner with the rotary shaft (3) to retain an operating fluid (4), and an annular portion (25) integral with the main lip (10) and formed by the last of the material fed into the mold (23); **characterized by** also comprising the further steps of shaping at least said annular portion (25) so as to form an additional radial lip (15) located in series with said main lip (10) and contacting, in use, said rotary shaft (3) to intercept and retain part of said fluid (4) directed towards the main lip (10).

2. A method as claimed in Claim 1, **characterized in that** shaping said annular portion (25) comprises at least a material removal step.

3. A method as claimed in Claim 2, **characterized in that** shaping said annular portion (25) comprises at least one cutting operation to cut off a portion (27) of said annular portion (25).

4. A method as claimed in Claim 3, **characterized in that** shaping and the cutting operation are performed to only remove a free annular end portion (27) of said annular portion (25).

5. A method as claimed in any one of the foregoing Claims, **characterized in that** shaping said annular portion (25) comprises the further step of forming, on an inner surface (20) of the annular portion (25), a number of projections (32) cooperating, in use, in sliding manner with said rotary shaft (3).

6. A method as claimed in any one of the foregoing Claims, **characterized by** comprising the further steps of shaping the main lip (10) formed in said mold so as to obtain a main sealing lip of given geometric characteristics.

7. A method as claimed in Claim 6, **characterized in that** shaping said main lip removed from the mold comprises a cutting step to cut off at least an end portion of main lip removed from the mold.

8. A sealing ring (1) for a rotary shaft (3), comprising a main sealing lip (10) cooperating, in use, in sliding manner with the rotary shaft (3) to retain an operating fluid (4); and an additional radial lip (15) located in series with said main lip (10) and directly contacting, in use, said rotary shaft (3) to intercept and retain part of said fluid (4) directed towards said main lip (10); **characterized in that** said main lip (10) and said additional lip (15) form part of a single body formed in one piece.

9. A ring as claimed in Claim 8, **characterized in that** said main lip (10) comprises an annular sealing edge (11) cooperating in sliding manner with said rotary shaft (3); said additional lip (15) extending from a portion of said main lip (10) adjacent to said annular sealing edge (11).

10. A ring as claimed in Claim 8 or 9, **characterized by** comprising an annular seat for an elastic element (13) for radially forcing the annular sealing edge (11) against said rotary shaft; said additional lip (15) extending inside a theoretical cylindrical surface (18) coaxial with an axis (2) of said ring (1) and tangent to the surface (14) defining said annular seat.

11. A ring as claimed in one of Claims 8 to 10, **characterized in that** said main lip (10) and said additional lip (15) are defined by a continuous inner surface (20) which, in radial half-section, is substantially V-shaped.

12. A ring as claimed in one of Claims 8 to 11, **characterized in that** at least an end portion of said additional lip (15) extends inside a theoretical cylindrical surface (30) coaxial with an axis (2) of the ring (1) and through the annular sealing edge (11) of said main lip (10).

13. A ring as claimed in one of Claims 8 to 12, **characterized in that** said additional lip (15) comprises a number of inner projections (32) cooperating in sliding manner with said rotary shaft (3).

14. A ring as claimed in Claim 13, **characterized in that** at least some of said projections (32) converge with one another.

15. A ring as claimed in Claim 13 or 15, **characterized in that** said projections (32), when undeformed, are substantially straight.
